# EUROPÄISCHE PATENTANMELDUNG

(11) **EP 4 296 078 A1**
(43) Veröffentlichungstag der Anmeldung: **27.12.2023**
(21) Anmeldenummer: 23156954.2
(22) Anmeldetag: 16.02.2023
(51) Int. Cl.: B60C 1/00, C08L 9/06

(54) **KAUTSCHUKMISCHUNGEN ENTHALTEND MINDESTENS EINEN FUNKTIONALISIERTEN SYNTHESEKAUTSCHUK UND MINDESTENS EINEN ETHOXYLIERTEN ALKOHOL**

(30) Priorität: 23.06.2022 EP 22180723
(71) Anmelder: LANXESS Deutschland GmbH, 50569 Köln (DE)
(72) Erfinder: ALBERS, Antonia, 50677 Köln (DE); OPRISONI, Cristian, 68723 Oftersheim (DE); ZISER, Torsten, 69488 Birkenau (DE); WEIDENHAUPT, Hermann-Josef, 50259 Pulheim (DE)

(57) **Zusammenfassung**

Die Erfindung betrifft Kautschukmischungen, enthaltend neben Füllstoffen und Vernetzer 50 bis 100 phr mindestens eines funktionalisierten Synthesekautschuks und 0,5 bis 20 phr der mindestens einen ethoxylierten Verbindung der Formel (I) RO(CH₂CH₂O)ₓH (I), worin R für Alkyl steht, wobei Alkyl verzweigt oder unverzweigt sein kann, und x für eine rationale Zahl von 1 bis 25 steht, geeignet zur Herstellung von Vulkanisaten mit niedrigem Rollwiderstand.

## Beschreibung

Die Erfindung betrifft neue Kautschukmischungen enthaltend mindestens einen funktionalisierten Synthesekautschuk und mindestens eine ethoxylierte Verbindung der Formel (I), Verfahren zu deren Herstellung und deren Verwendung zur Herstellung von Kautschukvulkanisaten, die entsprechenden Vulkanisate sowie die Verwendung des mindestens einen funktionalisierten Synthesekautschuks und der mindestens einen ethoxylierten Verbindung der Formel (I) in Kautschukmischungen, - vulkanisaten und daraus erhältlichen Formkörpern zur Reduzierung des Rollwiderstandes von Formkörpern enthaltend diese Vulkanisate, bevorzugt von Reifen.

Die EU hat sich dazu verpflichtet, ihre Treibhausgasemissionen zu verringern, um bis 2050 Klimaneutralität zu erreichen. Die Reduzierung der COz-Emissionen des Straßenverkehrs spielt bei der Erreichung dieser Ziele eine große Rolle.

Ein neues EU-Reifenkennzeichnungssystem, das zum 1. Mai 2021 in Kraft getreten ist, basiert auf drei wichtigen Reifeneigenschaften: Rollwiderstand - und damit Kraftstoffeffizienz -, Nasshaftung und externes Rollgeräusch. Das neue EU-Reifenlabel ermöglicht den Verbrauchern, sich bewusst für kraftstoffeffizientere Reifen zu entscheiden.

Kraftstoffeffizientere Reifen tragen zur Verringerung der Emissionen im Straßenverkehr bei. Abhängig vom Rollwiderstand des Reifens reicht die Kraftstoffeffizienz von Klasse A (beste Kraftstoffeffizienz) bis zur Klasse E. Der Kraftstoffverbrauch spielt aus ökonomischer und ökologischer Sicht eine wichtige Rolle. Ein niedriger Kraftstoffverbrauch wirkt sich positiv auf die CO₂ -Bilanz des Fahrzeugs aus, insbesondere bei schweren Nutzfahrzeugen.

Vor diesem Hintergrund suchen die Reifenhersteller nach wirtschaftlichen Möglichkeiten, um die Zielmarke Kraftstoffeffizienz der Klasse A für Reifen zu erreichen.

Der Einsatz von kieselsäurehaltigen Kautschukmischungen für die Herstellung von PKW-Reifenlaufflächen ist bekannt. Dabei trägt die Kieselsäure zu einer guten Eigenschaftskombination von Rollwiderstand, Nassrutschfestigkeit und Abrieb, wie sie für PKW-Reifenlaufflächen gefordert werden, bei. Um die gewünschte Eigenschaftskombination zu erzielen, ist es wichtig, die Kieselsäure gut in der Kautschukmischung zu dispergieren und bei der Vulkanisation optimal an die Kautschukmatrix anzukoppeln

Zur Verbesserung der Verarbeitbarkeit von kieselsäurehaltigen Kautschukmischungen sind weitere Zusatzstoffe möglich, wie beispielsweise Fettsäureester, Fettsäuresalze oder Mineralöle. Die genannten Zusatzstoffe besitzen den Nachteil, dass sie die Fließfähigkeit erhöhen, gleichzeitig aber die Spannungswerte bei größerer Dehnung (z.B. 100% bis 300%) oder auch die Härte der Vulkanisate vermindern, sodass die verstärkende Wirkung des Füllstoffes Einbuße erleidet. Eine zu geringe Härte oder Steifigkeit des Vulkanisates resultiert aber in einem unbefriedigenden Fahrverhalten des Reifens, besonders in Kurven. Zusätzlich führt eine zu geringe Härte zu einer verstärkten Abrasion des Vulkanisats durch die Fahrbahn und damit zu einem erhöhten Anteil von sogenanntem "Mikroplastik" in der Umwelt. Reifenabriebe sind die Hauptquelle von Mikroplastik in Flüssen und Seen und machen ca. 28 Prozent der Plastikpartikel in den Meeren aus.

Einen wichtigen Hinweis zur Beurteilung des Rollwiderstands gibt der Verlustfaktortan δ. Je geringer der Verlustfaktor tan δ ist, desto geringer ist auch der Rollwiderstand. Der Verlustfaktor tan δ sollte bei 60 bis 70 °C möglichst niedrig sein, gemäß US 9783658B2 < 0,2, gemäß der EP 2858831A2 < 0,12.

In EP 2858831A2 wird offenbart, dass Kautschukmischungen enthaltend 1 phr 1,6-Bis(N,N-dibenzylthiocarbamoyldithio)hexan (CAS-Nr.: 151900-44-6) und 1 phr bestimmter schwefelhaltiger Additive zu Vulkanisaten mit gutem dynamischen Verhalten, guter Härte/Steifigkeit, gutem Rollwiderstand und zu wenig Abrieb führen. Ein Nachteil ist, dass die Anvulkanisationszeit (t5) bei Vulkanisation dieser Kautschukmischung deutlich verkürzt wird, was hinsichtlich der Verarbeitungssicherheit von großem Nachteil ist. Aus Sicht der Kautschuk-verarbeitenden Industrie ist es zudem vorteilhafter, nur wenig Mischungskomponenten zu verwenden.

In US 9376551A1 wird der Rollwiderstand durch Zugabe bestimmter Organosilizium-polysulfide verringert. Die Ergebnisse in Tabelle 2 der US 9376551A1 zeigen, dass 1 phr des Organosiliziumpolysulfids den Verlustfaktor (tan δ bei 60°C) um mehr als 10 Prozent verringert. Die mechanischen Eigenschaften wie Zugfestigkeit, Bruchdehnung und Modul 300 blieben dabei nahezu unverändert. Auch hier ist von Nachteil, dass die Anvulkanisationszeit durch Zugabe des Organosiliziumpolysulfids drastisch reduziert wird.

Aufgabe der vorliegenden Erfindung war es daher, verbesserte Kautschukmischungen auf Basis eines hydroxylgruppenhaltigen oxidischen Füllstoffs bereit zu stellen, die die zuvor genannten Nachteile überwinden und zu Vulkanisaten und daraus hergestellten Formkörpern wie Reifenlaufflächen führen, die einen niedrigen Rollwiderstand, gemessen durch den Verlustfaktor tan δ bei 60°C, bevorzugt bei einer Messfrequenz von 10 Hz, aufweisen, bei gleichbleibenden oder verbesserten Eigenschaften wie Modul 300, Bruchdehnung und Härte. Bevorzugt sollen die verbesserten Kautschukmischungen auch verkürzte Ausvulkanisationszeiten (t95) aufweisen sowie verlängerte Anvulkanisationszeiten (t5). Weiter bevorzugt sollen die verbesserten Kautschukmischungen zu Vulkanisaten führen, die einen geringeren DIN Abrieb aufweisen und damit umweltfreundlicher sind.

Ein niedriger Verlustfaktor tan δ bei 60 °C, bevorzugt bei einer Messfrequenz von 10 Hz, bestimmt gemäß dynamischer Dämpfung DIN EN ISO 6721-1, beträgt bevorzugt kleiner 0,2, besonders bevorzugt kleiner 0,12.

Die Anvulkanisationszeit t5, bestimmt gemäß ASTM D5289-95, bei 160 °C liegt bevorzugt im Bereich von 70 - 150 Sekunden, besonders bevorzugt im Bereich von 85 -140 Sekunden.

Eine kurze Ausvulkanisationszeit t95 (Umsatzzeit 95%), bestimmt gemäß ASTM D5289-95, bei einer Temperatur von 160 °C ist bevorzugt im Bereich von 800 - 1300 Sekunden, besonders bevorzugt 900 - 1200 Sekunden.

Die Mooney Viskosität ML 1+4, bestimmt gemäß ASTM D1646 bei 100 °C, liegt bevorzugt in einem Bereich von 30 bis 100 MU, besonders bevorzugt im Bereich von 50 bis 90 MU.

Für Vulkanisate ist auch ein hoher Modul-300-Wert, insbesondere für die Reifenlaufflächen, vorteilhaft. Bevorzugt beträgt der Modul 300 (bestimmt gemäß DIN 53504) 8 - 20 MPa, besonders bevorzugt 9,5 - 20 MPa.

Die Härte, bestimmt gemäß DIN53505, sollte bevorzugt in einem Bereich von 55 - 70 Shore A liegen.

Der DIN Abrieb, bestimmt gemäß ASTM D5963, sollte bevorzugt niedrig sein und besonders bevorzugt kleiner 120 mm³, ganz besonders bevorzugt kleiner 110 mm³, sein.

Im Folgenden steht die Einheit "phr" für Gewichtsteile bezogen auf 100 Gewichtsteile der Gesamtmenge an in der Kautschukmischung enthaltenem Kautschuk, d.h. die Gesamtmenge an funktionalisierten und unfunktionalisierten Synthesekautschuk(en) und Naturkautschuk(en).

Überraschend wird die obige Aufgabe gelöst durch erfindungsgemäße Kautschukmischungen enthaltend
- 50 bis 100 phr mindestens eines funktionalisierten Synthesekautschuks, bevorzugt eines funktionalisierten BR -Kautschuks und/oder funktionalisierten SBR-Kautschuks,
- 0 bis 50 phr mindestens eines Naturkautschuks und/ oder unfunktionalisierten Synthesekautschuks,
- 0,1 bis 250 phr mindestens eines hydroxylgruppenhaltigen oxidischen Füllstoffs,
- 0 bis 120 phr mindestens eines Ruß, bevorzugt 0,1 bis 100 phr,
- 0,1 bis 20 phr mindestens eines Vernetzers, bevorzugt ausgewählt aus der Reihe der Schwefelspender und/oder Schwefel,
sowie
0,5 bis 20 phr der mindestens einen ethoxylierten Verbindung der Formel (I)

RO(CH₂CH₂O)ₓH (I)

worin
R für Alkyl steht, wobei Alkyl verzweigt oder unverzweigt sein kann,
   und
x für eine rationale Zahl von 1 bis 25 steht.

Überraschenderweise zeichnen sich die erfindungsgemäßen Vulkanisate, erhalten durch Vulkanisation der erfindungsgemäßen Kautschukmischungen, durch einen niedrigen Verlustfaktor tan δ bei 60 °C und einen verbesserten Modul 300 aus sowie eine reduzierte Mooney Viskosität, kurze Ausvulkanisationszeit (t95) und ausreichend lange Anvulkanisationszeit (t5) unter Beibehaltung gleich guter anwendungstechnischer Eigenschaften wie Bruchdehnung, Härte und Vulkanisationsverhalten.

### Kautschuke

Die erfindungsgemäßen Kautschukmischungen enthalten mindestens einen funktionalisierten Synthesekautschuk, bevorzugt ausgewählt aus der Gruppe bestehend aus polaren und unpolaren funktionalisierten Synthesekautschuken.

Unter funktionalisiertem Synthesekautschuk ist im Rahmen der vorliegenden Erfindung ein Synthesekautschuk zu verstehen, der an der Hauptkette und/oder an den Endgruppen durch eine oder mehrere funktionelle Gruppen, bevorzugt ausgewählt aus Carboxylgruppen, Mercaptan-Gruppen, Alkoxysilan-Gruppen, Siloxan-Gruppen, Hydroxy-Gruppen, Ethoxy-Gruppen, Epoxy-Gruppen, Amino-Gruppen Phthalocyanin-Gruppen, Silan-Sulfid-Gruppen und Metallatomenthaltenden Gruppen, substituiert ist, besonders bevorzugt ausgewählt aus Mercaptan-Gruppen, Alkoxysilan-Gruppen und Hydroxy-Gruppen, ganz besonders bevorzugt ausgewählt aus Mercaptan-Gruppen und Alkoxysilan-Gruppen.

Bevorzugte polare und unpolare funktionalisierte Synthesekautschuke sind funktionalisiertes
- BR -: Polybutadien
- ABR -: Butadien/Acrylsäure-C1-C4-alkylester-Copolymerisat
- CR -: Polychloropren
- IR -: Polyisopren
- SBR -: Styrol/Butadien-Copolymerisate mit Styrolgehalten von 1 - 60, vorzugsweise 20-50 Gew-%
- IIR -: Isobutylen/Isopren-Copolymerisate
- NBR -: Butadien/Acrylnitril-Copolymerisate mit Acrylnitrilgehalten von 5-60, vorzugsweise 10-50 Gew.-%
- HNBR -: teilhydrierter oder vollständig hydrierter NBR-Kautschuk
- EPDM -: Ethylen/Propylen/Dien-Copolymerisate
- SIBR -: Styrol-Isopren-Butadien Kautschuk
- ENR -: Epoxidierter Naturkautschuk
- SNBR -: Arcylnitril-Styrol/Butadien Kautschuk
- HNBR -: Hydrierter Arcylnitril/Butadien Kautschuk
- XNBR -: Carboxylisierter Arcylnitril/Butadien Kautschuk
- HXNBR -: Hydrierter carboxylisierter Arcylnitril/Butadien Kautschuk

Bevorzugt ist der mindestens eine funktionalisierte Synthesekautschuk ausgewählt aus der Gruppe bestehend aus funktionalisiertem SBR-, funktionalisiertem BR- und funktionalisiertem IR-Kautschuk, besonders bevorzugt aus funktionalisiertem SBR- und funktionalisiertem BR-Kautschuk.

Bevorzugt enthalten die erfindungsgemäßen Kautschukmischungen mindestens einen funktionalisierten SBR-Kautschuk und/oder einen funktionalisierten BR-Kautschuk, besonders bevorzugt mindestens einen funktionalisierten SBR- und mindestens einen funktionalisierten BR-Kautschuk.

Bevorzugt ist der mindestens eine funktionalisierte SBR-Kautschuk an der Hauptkette und/oder an den Endgruppen durch eine oder mehrere funktionelle Gruppen, insbesondere ausgewählt aus Mercaptan-Gruppen, Alkoxysilan-Gruppen und Hydroxy-Gruppen, substituiert, besonders bevorzugt durch mehrere funktionelle Gruppen, die Mercaptan-Gruppen und Alkoxysilan-Gruppen sind. Bevorzugt ist der mindestens eine funktionalisierte SBR-Kautschuk SPRINTAN^{®} SLR 3402 der Fa. Trinseo.

Bei dem funktionalisierten SBR-Kautschuk kann es sich um lösungspolymerisierten Styrol-Butadien-Kautschuk (SSBR) oder um emulsionspolymerisierten Styrol-Butadien-Kautschuk (ESBR) handeln, wobei auch ein Gemisch aus mindestens einem funktionalisierten SSBR und mindestens einem funktionalisierten ESBR eingesetzt werden kann.

Das Molgewicht (Mw) der Styrol-Butadien-Copolymere kann über einen weiten Bereich variieren. Bevorzugt sind Styrol-Butadien-Copolymere mit einem Mw von 250000 bis 600000 g/mol, besonders bevorzugt mit einem Mw von 350000 bis 500000 g/mol.

Bevorzugt ist der mindestens eine funktionalisierte BR-Kautschuk an der Hauptkette und/oder an den Endgruppen durch eine oder mehrere funktionelle Gruppen, ausgewählt aus Mercaptan-Gruppen, Alkoxysilan-Gruppen und Hydroxy-Gruppen, substituiert, besonders bevorzugt durch Alkoxysilan-Gruppen. Bevorzugt ist der mindestens eine funktionalisierte BR-Kautschuk NIPOL^{®} BR 1261 der Fa. Zeon.

Das Molgewicht der Butadien-Polymere kann über einen weiten Bereich variieren. Bevorzugt sind Butadien-Polymere mit einem Mw von 250000 bis 5000000 g/mol.

Polybutadien mit einem cis-Anteil größer oder gleich 90 Gew.-% wird als high-cis-Typ und Polybutadien mit einem cis-Anteil kleiner als 90 Gew.-% wird als low-cis-Typ bezeichnet. Ein low-cis-Polybutadien ist z.B. Li-BR (Lithium-katalysierter Butadien-Kautschuk) mit einem cis-Anteil von 20 bis 50 Gew.-%. Bevorzugt im Rahmen der vorliegenden Erfindung ist ein high-cis-Typ funktionalisierter BR-Kautschuk.

Die erfindungsgemäßen Kautschukmischungen enthalten 50 bis 100 phr mindestens eines funktionalisierten Synthesekautschuks, bevorzugt 70-100 phr.

Die erfindungsgemäßen Kautschukmischungen enthalten bevorzugt mindestens einen funktionalisierten SBR- und mindestens einen funktionalisierten BR-Kautschuk im Gewichtsverhältnis SBR:BR von 100:0 bis 0:100, besonders bevorzugt von 90:10 bis 10:90, ganz besonders bevorzugt von 90:10 bis 30:70, ganz ganz besonders bevorzugt von 80:20 bis 50:50.

Neben den oben genannten funktionalisierten Synthesekautschuken können die erfindungsgemäßen Kautschukmischungen auch mindestens einen unfunktionalisierten Synthesekautschuk und/oder mindestens einen Naturkautschuk enthalten. Es gelten dafür die oben genannten Ausführungen für die funktionalisierten Synthesekautschuke mit dem Unterschied, dass diese bei unfunktionalisierten Synthesekautschuken nicht funktionalisiert vorliegen.

Die erfindungsgemäßen Kautschukmischungen können 0 bis 50 phr mindestens eines unfunktionalisierten Synthesekautschuks und/oder mindestens eines Naturkautschuks enthalten, bevorzugt 0-30 phr.

### Ethoxylierte Verbindung der Formel (I)

Die erfindungsgemäßen Kautschukmischungen enthalten mindestens eine ethoxylierte Verbindung der Formel (I)

RO(CH₂CH₂O)ₓH (I)

worin
R für Alkyl steht, wobei Alkyl verzweigt oder unverzweigt sein kann,
   und
x für eine rationale Zahl von 1 bis 25 steht.

Bevorzugt steht R für C₁-C₂₀-Alkyl, besonders bevorzugt für C₅-C₁₇-Alkyl, ganz besonders bevorzugt für C₁₀-C₁₅-Alkyl, ganz ganz besonders bevorzugt für *iso*-C₁₃-Alkyl, meist bevorzugt für *iso*-C₁₃H₂₇.

Bevorzugt steht x für eine rationale Zahl von 2 bis 22, besonders bevorzugt von 4 bis 20.

Eine mindestens eine ethoxylierte Verbindung der Formel (I) ist beispielsweise in MARLIPAL^{®} O 13/50 der Fa. Sasol enthalten.

Die erfindungsgemäßen Kautschukmischungen enthalten die mindestens eine ethoxylierte Verbindung der Formel (I) im Allgemeinen in einer Menge von 0,5 bis 20,0 phr, bevorzugt von 1,0 bis 15,0 phr, besonders bevorzugt von 2,0 bis 12,0 phr und ganz besonders bevorzugt von 4,0 bis 11,0 phr.

### Füllstoffe

Der mindestens eine hydroxylgruppenhaltige oxidische Füllstoff ist bevorzugt ausgewählt aus der Gruppe bestehend aus Kieselsäuren, synthetischen Silikaten und natürlichen Silikaten.

Der Gehalt an hydroxylgruppenhaltigen oxidischen Füllstoffen in den erfindungsgemäßen Kautschukmischungen beträgt 0,1 bis 250 phr, bevorzugt 20 bis 200 phr, besonders bevorzugt 25 bis 180 phr und ganz besonders bevorzugt 30 bis 160 phr.

Als hydroxylgruppenhaltige oxidische Füllstoffe eignen sich bevorzugt solche aus der Reihe der
- Kieselsäuren, insbesondere mit einer spezifischen Oberfläche (BET) von 5 bis 1000, vorzugsweise 20 bis 400 m²/g, vorzugsweise mit Primärteilchengrößen von 100 bis 400 nm, wobei die Kieselsäuren gegebenenfalls auch als Mischoxide mit anderen Metalloxiden, wie Al-, Mg-, Ca-, Ba-, Zr-, Ti-oxiden vorliegen,
- synthetischen Silikate, wie Aluminiumsilikat, Erdalkalisilikate wie Magnesiumsilikat oder Calciumsilikat, mit spezifischen Oberflächen (BET) von 20 bis 400 m²/g, vorzugsweise mit Primärteilchengrößen von 10 bis 400 nm
   und
- natürlichen Silikate, wie Kaolin und andere natürliche vorkommende Kieselsäuren,
sowie Mischungen davon.

Die oben genannten BET Oberflächen werden gemäß DIN ISO 9277 bestimmt. Die Größenangaben der Primärteilchengrößen basieren auf Messungen mit einem Prüfgerät zur Partikelanalyse mittels Streulicht. Die Berechnung der Partikelgröße basiert dabei auf der Mie-Theorie, welche die Wechselwirkung zwischen Licht und Materie beschreibt (DIN/ISO 13320).

Bevorzugt sind die Kieselsäuren durch Fällung von Lösungen von Silikaten oder Flammenhydrolyse von Siliciumhalogeniden erhältlich.

Bevorzugt enthalten die erfindungsgemäßen Kautschukmischungen mindestens einen hydroxylgruppenhaltigen oxidischen Füllstoff aus der Reihe der Kieselsäuren, insbesondere mit einer spezifischen Oberfläche (BET) im Bereich von 5 bis 1000, bevorzugt 20 bis 400 m²/g in einer Menge von 0,1 bis 250 phr, bevorzugt 20 bis 200 phr, besonders bevorzugt von 25 bis 180 phr, ganz besonders bevorzugt 30 - 160 phr.

Die erfindungsgemäßen Kautschukmischungen können als Füllstoff mindestens einen Ruß enthalten. In einer bevorzugten Ausführungsform enthalten die erfindungsgemäßen Kautschukmischungen als Füllstoff mindestens einen Ruß.

Bevorzugt enthalten die erfindungsgemäßen Kautschukmischungen mindestens einen Ruß in einer Menge von 0,1 bis 120 phr, bevorzugt 0,1 bis 100 phr, besonders bevorzugt 1 bis 70 phr, ganz besonders bevorzugt 2 bis 40 phr.

Bevorzugt sind Ruße, die nach dem Flammruß-, Furnace- oder Gasrußverfahren erhältlich sind und die eine spezifische Oberfläche (BET) im Bereich von 20 bis 200 m²/g besitzen, wie z.B. SAF-, ISAF-, IISAF-, HAF-, FEF- oder GPF-Ruße. Bevorzugt enthalten die erfindungsgemäßen Kautschukmischungen mindestens einen Ruß mit einer spezifische Oberfläche (BET) im Bereich von 20 bis 200 m²/g .

Besonders bevorzugt enthalten die erfindungsgemäßen Kautschukmischungen als Füllstoffe mindestens eine der oben genannten Kieselsäuren und mindestens einen der oben genannten Ruße. Ganz besonders bevorzugt enthalten die erfindungsgemäßen Kautschukmischungen als Füllstoffe 25 bis 180 phr, bevorzugt 30 bis 160 phr, mindestens eine der oben genannten Kieselsäuren und 1,0 bis 70 phr, bevorzugt 2,0 bis 40 phr, mindestens einen der oben genannten Ruße.

Die Gesamtmenge an Ruß und kieselsäurebasierenden Füllstoffen in der erfindungsgemäßen Kautschukmischung beträgt bevorzugt 26 bis 250 phr, besonders bevorzugt 32 bis 200.

### Vernetzer und Vulkanisationsbeschleuniger

Die erfindungsgemäßen Kautschukmischungen können einen oder mehrere Vernetzer enthalten.

Bevorzugt enthalten die erfindungsgemäßen Kautschukmischungen mindestens einen Vernetzer aus der Reihe Schwefel und Schwefelspender.

Schwefel kann in elementarer löslicher oder unlöslicher Form eingesetzt werden. Besonders bevorzugt enthalten die erfindungsgemäßen Kautschukmischungen mindestens einen Schwefelspender und/oder Schwefel, ganz besonders bevorzugt Schwefel.

Als Schwefelspender kommen beispielsweise Dimorpholyldisulfid (DTDM), 2-Morpholinodithiobenzothiazol (MBSS), Caprolactamdisulfid, Dipentamethylen-thiuramtetrasulfid (DPTT), Tetramethylthiuramdisulfid (TMTD) und Tetrabenzyl-thiuramdisulfid (TBzTD) in Frage.

Die erfindungsgemäßen Kautschukmischungen enthalten im Allgemeinen 0,1 bis 20 phr, bevorzugt 0,5 bis 10 phr, besonders bevorzugt von 1,0 bis 8 phr und meist bevorzugt 1 bis 4 phr des mindestens einen Vernetzers aus der Reihe Schwefel und Schwefelspender.

Zinkoxid kann in den erfindungsgemäßen Kautschukmischungen zugegen sein. Es ist ein Komplexbildner für Schwefel und Schwefelspender und vereinfacht so die Anbindung des Schwefels an die Kautschukmatrix.

Bevorzugte erfindungsgemäße Kautschukmischungen enthalten Zinkoxid mit einer BET-Oberfläche von 2 bis 100 m²/g, bevorzugt 2 bis 70 m²/g. BET-Oberflächen von Zinkoxid können gemäß DIN ISO 9277 gemessen werden.

Im Allgemeinen ist Zinkoxid in einer Menge von 0 bis 20 phr, bevorzugt von 0,1 bis 10 phr, besonders bevorzugt von 1 bis 5 phr in den erfindungsgemäßen Kautschukmischungen enthalten.

Die erfindungsgemäßen Kautschukmischungen können einen oder mehrere Vulkanisationsbeschleuniger enthalten.

Bevorzugt enthalten die erfindungsgemäßen Kautschukmischungen mindestens einen Vulkanisationsbeschleuniger, besonders bevorzugt aus der Gruppe der Mercapto-benzthiazole, Thiocarbamate, Dithiocarbamate, Thiurame, Thiazole, Sulfenamide, Thiazolsulfenamide, Xanthogenate, bi- oder polycyclische Amine, Thiophosphate, Dithiophosphate, Caprolactame, Thioharnstoffderivate, Guanidine, cyclischen Disulfane sowie Amine, insbesondere Zink-diamindiisocyanat, Hexamethylentetramin, 1,3-Bis(citraconimidomethyl)benzol und ganz besonders bevorzugt aus der Gruppe der Sulfenamide, ganz besonders bevorzugt N-Cyclohexylbenzothiazolsulfenamid (CAS-Nr.: 95-33-0).

Die erfindungsgemäßen Kautschukmischungen enthalten im Allgemeinen 0,1 bis 20 phr, bevorzugt 0,5 bis 10 phr und besonders bevorzugt 1,0 bis 5 phr an mindestens einem der genannten Vulkanisationsbeschleuniger.

Bevorzugt enthalten die erfindungsgemäßen Kautschukmischungen mindestens einen Vernetzer und mindestens einen Vulkanisationsbeschleuniger.

Besonders bevorzugt enthalten die erfindungsgemäßen Kautschukmischungen mindestens einen Vernetzer aus der Reihe Schwefel und Schwefelspender und mindestens einen Vulkanisationsbeschleuniger aus der Reihe der Merkaptobenzothiazole, Thiazolsulfenamide, Thiurame, Dithiocarbamate, Xanthogenate und Thiophosphate, besonders bevorzugt der Sulfenamide, ganz besonders bevorzugt N-Cyclohexylbenzothiazolsulfenamide (CAS-Natur.: 95-33-0).

Besonders bevorzugt enthalten die erfindungsgemäßen Kautschukmischungen mindestens einen Vernetzer ausgewählt aus der Gruppe bestehend aus Schwefel und Schwefelspender, mindestens einen Vulkanisationsbeschleuniger ausgewählt aus der Gruppe bestehend aus Merkaptobenzothiazole, Thiazolsulfenamide, Thiurame, Dithiocarbamate, Xanthogenate und Thiophosphate, besonders bevorzugt der Sulfenamide, ganz besonders bevorzugt N-Cyclohexylbenzothiazol-2-sulfenamide (CAS-Nr.: 95-33-0) sowie Zinkoxid.

Die Gesamtmenge an Vernetzer und Vulkanisationsbeschleuniger in den Kautschukmischungen beträgt bevorzugt 1,0 bis 20 phr, besonders bevorzugt von 2,0 bis 13 phr.

### Verstärkungsadditive

Die erfindungsgemäßen Kautschukmischungen können ein oder mehrere Verstärkungs-additive enthalten.

Vorzugsweise enthalten die erfindungsgemäßen Kautschukmischungen mindestens ein Verstärkungsadditiv aus der Reihe der schwefelhaltigen organischen Silane, insbesondere der Alkoxysilylgruppen-haltigen schwefelhaltigen Silane und ganz besonders bevorzugt der Trialkoxysilylgruppen-haltigen schwefelhaltigen organischen Silane.

Besonders bevorzugt enthalten die erfindungsgemäßen Kautschukmischungen ein oder mehrere schwefelhaltige Silane aus der Reihe Bis-(triethoxysilylpropyl)-tetrasulfan, Bis-(triethoxysilylpropyl - disulfan und 3-(Triethoxysilyl)-1-propanthiol.

Flüssige schwefelhaltige Silane können zur besseren Dosierbarkeit und/oder Dispergierbarkeit auf einem Träger aufgezogen werden (dry liquid). Der Gehalt an schwefelhaltigen Silanen in diesen "dry liquids" liegt bevorzugt zwischen 30 und 70 Gew.-Teilen, besonders bevorzugt zwischen 40 und 60 Gew.-Teilen je 100 Gew.-Teile dry liquid.

Die erfindungsgemäßen Kautschukmischungen enthalten im Allgemeinen 0,1 bis 20 phr, vorzugsweise 0,5 bis 15 phr und besonders bevorzugt 1,0 bis 10 phr an mindestens einem Verstärkungsadditiv.

### Kautschukhilfsmittel

Die erfindungsgemäßen Kautschukmischungen können weiterhin ein oder mehrere Kautschukhilfsmittel enthalten. Als Kautschukhilfsmittel kommen beispielsweise Alterungsschutzmittel, Haftmittel Wärmestabilisatoren, Lichtschutzmittel, Flamm-schutzmittel, Verarbeitungshilfsmittel, Schlagzähfestigkeitsverbesserer, Weichmacher, Tackifier, Treibmittel, Farbstoffe, Pigmente, Wachse, Streckmittel, organische Säuren wie Steearinsäure, Verzögerer, insbesondere Triethanolamin, Polyethylenglykol, Hexantriol, und Reversionsschutzmittel sowie Sekundärbeschleuniger in Frage.

Diese Kautschukhilfsmittel können den erfindungsgemäßen Kautschukmischungen in den für diese Hilfsmittel üblichen Mengen, die sich auch nach dem Verwendungszweck der daraus hergestellten Vulkanisate richten, zugesetzt werden. Übliche Mengen sind beispielsweise 0,1 bis 30 phr.

Die erfindungsgemäßen Kautschukmischungen können ein oder mehrere Alterungsschutzmittel enthalten. Als solche geeignet sind aminische Alterungsschutzmittel wie z. B. Diaryl-p-phenylendiaminen (DTPD), octyliertes Diphenylamin (ODPA), Phenyl-α-naphthylamin (PAN), Phenyl-β-naphthylamin (PBN), vorzugsweise solche auf Phenylen-diaminbasis, z. B. N,N'-Dicyclohexyl-p-phenylendiamin (CCPD), N-Isopropyl-N'-phenyl-p-phenylendiamin, N-1,3-Dimethylbutyl-N'-phenyl-p-phenylen-diamin (6PPD), N-1,4-Dimethylpentyl-N'-phenyl-p-phenylendiamin (7PPD), N,N'-bis-(1,4-Dimethylpentyl)-p-phenylendiamin (77PD) sowie Phosphite wie Tris-(nonylphenyl)phosphit, polymerisiertes 2,2,4-Trimethyl-1,2-dihydrochinolin (TMQ), Methyl-2-Mercapto-benzimidazol (MMBI) und Zinkmethylmercaptobenzimidazol (ZMMBI) sowie Mischungen davon. Besonders bevorzugt wird das mindestens eine Alterungsschutzmittel ausgewählt aus der Gruppe bestehend aus N,N'-Dicyclohexyl-p-phenylendiamin (CCPD) und N-1,3-Dimethylbutyl-N'-phenyl-p-phenylen-diamin (6PPD).

Verarbeitungshilfsmittel sollen zwischen den Kautschuk-Partikeln wirksam werden und Reibungskräften beim Mischen, Plastifizieren und Verformen entgegenwirken. Als Verarbeitungshilfsmittel können die erfindungsgemäßen Kautschukmischungen alle für die Verarbeitung von Kunststoffen üblichen Gleitmittel enthalten, wie beispielsweise Kohlenwasserstoffe, wie Öle, z.B. aromatisches Prozessöl, Paraffine und PE-Wachse, Fettalkohole mit 6 bis 20 C- Atomen, Ketone, Carbonsäuren, wie Fettsäuren und Montansäuren, oxidiertes PE-Wachs, aromatisch modifizierte cycloaliphatische Kohlenwasserstoffharze, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Um die Entflammbarkeit zu vermindern und die Rauchentwicklung beim Verbrennen zu verringern, können die erfindungsgemäße Kautschukmischungen Flammschutzmittel enthalten. Hierfür werden beispielsweise Antimontrioxid, Phosphorsäureester, Chlorparaffin, Aluminiumhydroxid, Borverbindungen, Zinkverbindungen ausgenommen ZnO, Molybdäntrioxid, Ferrocen, Calciumcarbonat oder Magnesiumcarbonat verwendet.

Vor der Vernetzung können der erfindungsgemäßen Kautschukmischungen auch weitere Kunststoffe beigefügt werden, die beispielsweise als polymere Verarbeitungshilfsmittel oder Schlagzähigkeitsverbesserer wirken. Diese Kunststoffe werden bevorzugt gewählt aus der Gruppe bestehend aus den Homo- und Copolymeren auf Basis von Ethylen, Propylen, Butadien, Styrol, Vinylacetat, Vinylchlorid, Glycidylacrylat, Glycidylmethacrylat, Acrylaten und Methacrylaten mit Alkoholkomponenten von verzweigten oder unverzweigten C1- bis C10-Alkoholen, wobei Polyacrylate mit gleichen oder verschiedenen Alkoholresten aus der Gruppe der C4- bis C8-Alkohole, insbesondere des Butanols, Hexanols, Octanols und 2-Ethylhexanols, Polymethylmethacrylat, Methylmethacrylat-Butylacrylat-Copolymere, Methylmethacrylat-Butylmethacrylat-Copolymere, Ethylen-Vinylacetat-Copolymere, chloriertes Polyethylen, Ethylen-Propylen-Copolymere, Ethylen-Propylen-Dien-Copolymere besonders bevorzugt sind.

Bekannte Haftmittel basieren auf Resorcin, Formaldehyd und Silica, die sogenannten RFS-Direkthaftsysteme. Diese Direkthaftsysteme können in beliebiger Menge der erfindungsgemäßen Kautschukmischung zu jedem Zeitpunkt des Einmischens in die erfindungsgemäßen Kautschukmischungen, eingesetzt werden.

In Kieselsäure-basierten Kautschukmischungen, wie sie bevorzugt zur Reifenherstellung eingesetzt werden, wird typischerweise Diphenylguanidin (DPG) oder werden strukturähnliche aromatische Guanidine als Sekundärbeschleuniger eingesetzt.

Dem Fachmann ist bekannt, dass DPG durch 1,6-bis(N,N-dibenzylthiocarbamoyldithio)-hexan, auch unter dem Handelsname Vulcuren^{®} bekannt, vorteilhaft substituiert werden kann. Ein Ersatz von DPG durch einen Sekundärbeschleuniger wie TBzTD (Tetra-benzylthiuramdisulfid) oder Dithiophosphate ist auch möglich.

Die erfindungsgemäßen Kautschukmischungen enthalten im Allgemeinen 0 oder von 0,1 bis 10 phr, bevorzugt 0,5 bis 5 phr, besonders bevorzugt 0,2 bis 3,5 phr an mindestens einem der genannten Sekundärbeschleuniger.

Besonders bevorzugt sind erfindungsgemäße Kautschukmischungen enthaltend
- 70 bis 100 phr mindestens eines funktionalisierten Synthesekautschuks, bevorzugt eines funktionalisierten BR-Kautschuks und/oder funktionalisierten SBR-Kautschuks,
- 0 bis 30 phr mindestens eines Naturkautschuks und/ oder unfunktionalisierten Synthesekautschuks,
- 20 bis 200 phr mindestens eines hydroxylgruppenhaltigen oxidischen Füllstoffs,
- 0,1 bis 120 phr mindestens eines Ruß, bevorzugt 0,1 bis 100 phr,
- 0,5 bis 10 phr mindestens eines Vernetzers, bevorzugt ausgewählt aus der Reihe der Schwefelspender und/oder Schwefel,
- 0,1 bis 10 phr Zinkoxid,
- 0,5 bis 10 phr mindestens eines Vulkanisationsbeschleunigers, insbesondere aus der Reihe der Sulfenamide,
- 0,1 bis 10,0 phr mindestens eines Sekundärbeschleunigers,
- 0,5 bis 15 phr mindestens eines Verstärkungsadditives, insbesondere aus der Gruppe der schwefelhaltigen Silane,
- 0,1 bis 30 phr Kautschukhilfsmittel und
- 1 bis 15 phr der mindestens einen ethoxylierten Verbindung der Formel (I).

Die oben genannten weiteren Vorzugsbereiche der einzelnen Komponenten gelten auch für diese bevorzugten Mischungen.

### Verfahren zur Herstellung der Kautschukmischungen

Ein weiterer Gegenstand der vorliegenden Erfindung ist ein Verfahren zur Herstellung der erfindungsgemäßen Kautschukmischungen, dadurch gekennzeichnet, dass in einem Mischprozess die jeweiligen Komponenten gemischt werden. Bevorzugt werden mindestens ein funktionalisierter Synthesekautschuk, gegebenenfalls mindestens ein Naturkautschuk und/oder unfunktionalisierter Synthesekautschuk, und mindestens eine ethoxylierte Verbindung der Formel (I), in Gegenwart von mindestens einem Füllstoff, mindestens einem Vernetzer, gegebenenfalls mindestens einem Ruß, gegebenenfalls mindestens einem Vulkanisationsbeschleuniger, gegebenenfalls Zinkoxid, gegebenenfalls mindestens einem Sekundärbeschleuniger, gegebenenfalls mindestens einem Verstärkungsadditiv und gegebenenfalls einem oder mehreren der genannten Kautschukhilfsmittel in den für diese Zusatzstoffe genannten allgemeinen und bevorzugten Mengen bei einer Temperatur im Bereich von 130 bis 180°C, besonders bevorzugt von 140 bis 170°C, miteinander vermischt.

Die Herstellung der erfindungsgemäßen Kautschukmischungen erfolgt in üblicher Weise in bekannten Mischaggregaten, wie Walzen, Innenmischern, nachgeschalteten Mischwalzwerken und Mischextrudern bei Scherraten von 1 bis 1000 sec⁻¹.

Bevorzugt erfolgt die Herstellung der erfindungsgemäßen Kautschukmischungen in einem dreistufigen Mischprozess. In einer ersten Mischstufe werden zunächst die Füllstoffe sowie die mindestens eine ethoxylierte Verbindung der Formel (I) sowie ggfs. weitere oben genannte Kautschukhilfsmittel, bevorzugt Alterungsschutzmittel und Sekundärbeschleuniger, in einem Innenmischer (Kneter) in den Kautschuk eingearbeitet.

Mischtemperaturen im Innenmischer können Werte bis zu 180°C erreichen. Die Mischtemperatur im Innenmischer beträgt bevorzugt 130 bis 180°C, besonders bevorzugt 140 bis 170°C.

Danach erfolgt als zweiter Schritt bevorzugt das sogenannte Nachzwicken, bevorzugt bei 130 - 180°C, besonders bevorzugt bei 160°C. Das Nachzwicken kann beispielsweise in einem Innenmischer erfolgen.

In einer dritten Mischstufe werden Vernetzer, Vulkanisationsbeschleuniger und ggfs. weitere oben genannte Kautschukhilfsmittel, bevorzugt Sekundärbeschleuniger und Zinkoxid zu der aus der ersten Mischstufe erhaltenen Mischung gegeben. Die Mischtemperatur in der zweiten Mischstufe beträgt vorzugsweise 50 - 130°C, bevorzugt 55 - 130°C, insbesondere von 60 bis 120°C.

Die Zugabe der mindestens einen ethoxylierten Verbindung der Formel (I) kann zu jedem Zeitpunkt des Mischens erfolgen, vorzugsweise im ersten Schritt des Mischvorgangs bei einer Temperatur im Bereich von 130°C bis 180 °C, bevorzugt bei einer Temperatur von 140 bis 170°C.

Die mindestens eine ethoxylierte Verbindung der Formel (I) kann sowohl in reiner Form als auch auf einen inerten, organischen oder anorganischen Träger, vorzugsweise einen Träger ausgewählt aus der Gruppe enthaltend natürliche oder synthetische Silikate, insbesondere neutrales, acides oder basisches Silica, Aluminiumoxid, Ruß oder Zinkoxid aufgezogen und/oder daran adsorbiert in den Mischprozess eingesetzt werden.

### Haftmischungen

Weiterer Gegenstand der vorliegenden Erfindung sind Haftmischungen enthaltend eine erfindungsgemäße Kautschukmischung und mindestens ein Haftmittel.

Die erfindungsgemäßen Haftmischungen enthalten vorzugsweise mindestens ein Haftmittel basierend auf Resorcin, Formaldehyd und Kieselsäure.

Kombinationen aus Resorcin, Formaldehyd und Kieselsäure (Silica) sind als sogenannte RFS-Direkthaftsysteme aus dem Stand der Technik bekannt. Die erfindungsgemäßen Haftmischungen können diese Direkthaftsysteme in beliebiger Menge enthalten.

Die erfindungsgemäßen Haftmischungen können hergestellt werden in bekannter Weise durch Mischen einer erfindungsgemäßen Kautschukmischung mit mindestens einem Haftmittel basierend auf Resorcin, Formaldehyd und Kieselsäure.

In den Haftmitteln kann das Formaldehyd in Form von Formaldehyd-Spendern vorliegen. Als Formaldehyd-Spender eignen sich neben Hexamethylentetramin auch Methylolaminderivate.

Den erfindungsgemäßen Haftmischungen können zur Haftverbesserung eine oder mehrere, zur Kunstharzbildung befähigten Komponenten wie Phenol und/oder Amine und/oder Aldehyde oder Aldehyde abspaltende Verbindungen zugesetzt werden.

### Verfahren zur Herstellung der Kautschukvulkanisate

Die vorliegende Erfindung betrifft weiterhin ein Verfahren zur Herstellung von Kautschukvulkanisaten, dadurch gekennzeichnet, dass die erfindungsgemäße Kautschukmischung bei Temperaturen von 120 bis 200°C, bevorzugt bei 140 bis 180°C erhitzt wird.

Das Verfahren zur Herstellung der erfindungsgemäßen Kautschukvulkanisate kann in einem weiten Druckbereich durchgeführt werden, bevorzugt wird es bei einem Druck im Bereich von 10 bis 200 bar durchgeführt.

Weiterer Gegenstand der vorliegenden Erfindung sind Kautschukvulkanisate, die erhältlich sind durch Vulkanisation der erfindungsgemäßen Kautschukmischungen.

Die erfindungsgemäßen Kautschukvulkanisate weisen insbesondere bei Anwendung in Reifen einen unerwartet niedrigen Rollwiderstand auf, bei vergleichbaren anwendungstechnischen Eigenschaften. Der Rollwiderstand wird im Rahmen dieser Erfindung bestimmt über den Verlustfaktor tan δ bei 60°C gemäß dynamischer Dämpfung DIN EN ISO 6721-1.

### Formkörper

Die erfindungsgemäßen Kautschukvulkanisate eignen sich zur Herstellung von Formkörpern aller Art wie z.B. Reifenbauteilen, technischen Gummiartikeln wie Dämpfungselementen, Walzenbelägen, Belägen von Förderbändern, Riemen, Spinnkopsen, Dichtungen, Golfballkernen, Schuhsohlen, insbesondere eignen sie sich zur Herstellung von Reifen und Reifenteilen, wie Reifenlaufflächen, Subtreads, Karkassen Seitenwänden von Reifen, verstärkten Seitenwänden für Notlaufreifen und Apexmischungen. Reifenlaufflächen schließen dabei auch Laufflächen von Sommer-, Winter- und All-Seasons-Reifen sowie Laufflächen von PKW- und LKW-, Leicht-LKW-Reifen ein.

Bevorzugte Formkörper sind Reifen und Reifenteile enthaltend ein erfindungsgemäßes Kautschukvulkanisat.

### Verwendung

Weiterer Gegenstand der vorliegenden Erfindung ist die Verwendung der mindestens einen ethoxylierten Verbindung der Formel (I), insbesondere in einer Menge von 0,5 bis 20 phr, besonders bevorzugt von 1,0 bis 15,0 phr, und des mindestens einen funktionalisierten Synthesekautschuks, insbesondere in einer Menge von 50-100 phr, besonders bevorzugt von 70-100 phr, zur Herstellung von Vulkanisaten mit niedrigem Rollwiderstand aus schwefelvernetzbaren Kautschukmischungen, bei einer Vulkanisationstemperatur von 120 bis 200°C.

Weiterer Gegenstand der vorliegenden Erfindung ist die Verwendung der mindestens einen ethoxylierten Verbindung der Formel (I) und des mindestens einen Synthesekautschuks in Kautschukmischungen, -vulkanisaten und daraus erhältlichen Formkörpern zur Reduzierung des Rollwiderstandes von Formkörpern aus Kautschukvulkanisaten, bevorzugt von Reifen und Reifenteilen.

Die für die in der erfindungsgemäßen Kautschukmischung enthaltenen und gegebenenfalls enthaltenen Komponenten, wie den mindestens einen funktionalisierten Synthesekautschuk, den mindestens einen Naturkautschuk, den mindestens einen unfunktionalisierten Synthesekautschuk, den mindestens einen hydroxylgruppenhaltigen oxidischen Füllstoff, den mindestens einen Ruß, den mindestens einen Vernetzer, den mindestens einen Vulkanisationsbeschleuniger, das Zinkoxid, den mindestens einen Sekundärbeschleuniger, das mindestens eine Verstärkungsadditiv, die Kautschukhilfsmittel und die mindestens eine ethoxylierte Verbindung der Formel (I), angeführten Beschreibungen und Vorzugsbereiche gelten für u.a. die offenbarten Verfahren und Verwendungen sowie die Vulkanisate, Formkörper und Haftmischungen analog.

Ebenso gelten die angeführten Beschreibungen und Vorzugsbereiche für u.a. die erfindungsgemäßen Kautschukmischungen, Vulkanisate, Formkörper, Haftmischungen Verfahren und Verwendungen unabhängig davon, ob sie für vorgenannte im Plural (z.B. Kautschukmischungen) oder im Singular (z.B. Kautschukmischung) offenbart wurden.

Die Erfindung soll anhand der folgenden Beispiele erläutert werden, ohne diese jedoch darauf zu beschränken.

### Ausführungsbeispiele

**Tabelle 1: Liste der Einsatzstoffe, Abkürzungen und Hersteller**

| Handelsname | Erläuterung | Hersteller/Vertrieb |
|---|---|---|
| NIPOL^{®} BR1261 | Funktionalisierter Polybutadien Kautschuk (BR) | Zeon |
| SPRINTAN^{®} SLR 3402 | Funktionalisierter Styrol-butadien-Kautschuk (SBR) (TG - 62 °C) | Trinseo |
| CORAX^{®} N 234 | Ruß | Orion Engineered Carbons GmbH |
| VIVATEC 500 | aromatisches Prozessöl | Hansen & Rosenthal (H&R GRUPPE) |
| PALMERA^{®} A9818 | Stearinsäure | KLK OLEO |
| ANTILUX^{®} 654 | Wachs | Lanxess Deutschland GmbH |
| RHENOGRAN^{®} CBS-80 | N-Cyclohexyl-2-benzothiazol-sulfenamid (Polymer gebunden; 80% CBS enthaltend) | Lanxess Deutschland GmbH |
| ZINKOXID WS | Zinkoxid Weißsiegel | L. Brüggemann GmbH & Co. KG |
| SCHWEFEL | Schwefel | Kandelium Group GmbH |
| VULKANOX^{®} 4020/LG | *N*-1,3-Dimethylbutyl-*N*'-phenyl-*p*-phenylendiamin | Lanxess Deutschland GmbH |
| ZEOSIL^{®} 1165MP | Kieselsäure | Solvay Deutschland GmbH |
| VULKANOX^{®} HS | 2,2,4-trimethyl-1,2-dihydroquinoline, polymerisiert (TMQ) | Lanxess Deutschland GmbH |
| SI^{®} 75 | Bis-(triethoxysilylpropyl)-tetrasulfan | Evonik Resource Efficiency GmbH |
| RHENOGRAN^{®} DPG-80 | *N*,*N'-*Diphenylguanidine (Polymer gebunden; 80% DPG enthaltend) | Lanxess Deutschland GmbH |
| MARLIPAL^{®} O 13/50 | Isotridecanol, ethoxylated (Verbindung der Formel (I), mit R= *iso*-C₁₃H₂₇ und x = 4-20) | Sasol Germany GmbH |
| ESCOREZ^{®} 5600 | Aromatisch modifizierte cycloaliphatische Kohlenwasserstoffharze | ExxonMobil |

### Herstellung der Kautschukvulkanisate

Es wurden die Kautschukmischungen der nicht erfindungsgemäßen Referenzmischung in Anlehnung an EP2858831A1, welche eine klassische SBR- und BR-enthaltende Kautschukmischung darstellt, sowie der erfindungsgemäßen Beispiele 1 und 2 gemäß den in Tabelle 2 angegeben Rezepturen hergestellt. Der Unterschied der erfindungsgemäßen Beispiele gegenüber der Referenzmischung ist, dass diese neben den funktionalisierten Synthesekautschuken auch MARLIPAL^{®} O 13/50 und damit eine ethoxylierte Verbindung der Formel (I) enthalten.

Die Herstellung der Kautschukmischungen erfolgte in folgenden Schritten:

### 1. Mischstufe:

▪ NIPOL^{®} BR1261 und SPRINTAN^{®} SLR 3402 werden in einem Innenmischer vorgelegt und ca. 30 Sekunden gemischt
▪ Zugabe der Alterungsschutzmittel VULKANOX^{®} 4020 und VULKANOX^{®} HS und ca. 30 s mischen
▪ Zugabe Hälfte ZEOSIL 1165MP und SI^{®} 75 mischen für ca 60 Sekunden
▪ Zugabe Hälfte ZEOSIL 1165MP, CORAX^{®} N 234, sowie PALMERA^{®} A9818, Vivatec 500, Escorez 5600, RHENOGRAN^{®} DPG-80 und MARLIPAL^{®} O 13/50, mischen ca. 60 Sekunden, dann kehren. Mischen bis eine Temperatur von 160 °C erreicht ist, danach 4 min mischen bei 160 °C.

Nach Abschluss der ersten Mischstufe wird das Mischstück von einem nachgeschalteten Walzwerk aufgenommen und zu einer Platte, einem Streifen oder Pellets ausgeformt und für 24 Stunden bei Raumtemperatur gelagert. Verarbeitungstemperaturen liegen hierbei bei 70°C.

### 2. Mischstufe:

Danach erfolgte ein Mischen in einem Innenmischer bis eine Temperatur von 160°C erreicht ist (das sogenannte Nachzwicken).

Nach Abschluss der zweiten Mischstufe wird das Mischstück von einem nachgeschalteten Walzwerk aufgenommen und zu einer Platte, einem Streifen oder Pellets ausgeformt und für 24 Stunden bei Raumtemperatur gelagert.

### 3. Mischstufe:

Die Zugabe von Zusatzstoffen wie Schwefel, Zinkoxid und Rhenogran^{®}-CBS-80, erfolgte im Innenmischer für 2 min bei 100 °C.

Nach Abschluss der dritten Mischstufe wird das Mischstück mit einem Walzwerk zu einer Platte, einem Streifen oder Pellets ausgeformt und für 24 Stunden bei Raumtemperatur gelagert. Verarbeitungstemperaturen liegen hierbei bei 70°C.

Die erfindungsgemäßen Kautschukmischungen 1 und 2 zeigten keine Stippen auf der Oberfläche, so dass von einer guten Vermischung der verwendeten Additive ausgegangen wird.

**Tabelle 2: Kautschuk-Rezepturen (Angaben in phr)**

| | **Referenz** | **Beispiel 1** | **Beispiel 2** |
|---|---|---|---|
| NIPOL^{®} BR1261 | 40 | 40 | 40 |
| SPRINTAN^{®} SLR 3402 | 60 | 60 | 60 |
| CORAX^{®} N 234 | 5 | 5 | 5 |
| ZEOSIL^{®} 1165MP | 120 | 120 | 120 |
| VIVATEC 500 | 20 | 20 | 20 |
| PALMERA^{®} A9818 | 2 | 2 | 2 |
| VULKANOX^{®} 4020/LG | 2 | 2 | 2 |
| VULKANOX^{®} HS/LG | 2 | 2 | 2 |
| RHENOGRAN^{®} DPG-80 | 2,5 | 2,5 | 2,5 |
| ESCOREZ^{®} 5600 | 30 | 30 | 30 |
| ANTILUX^{®} 654 | 2 | 2 | 2 |
| SI^{®} 75 | 8,5 | 8,5 | 8,5 |
| ZINKOXID WS | 2,5 | 2,5 | 2,5 |
| RHENOGRAN^{®} CBS-80 | 2 | 2 | 2 |
| SCHWEFEL | 2 | 2 | 2 |
| MARLIPAL^{®} O 13/50 | | 5 | 10 |

### Technische Prüfung

Die bei 160°C aus den Kautschukmischungen der Beispiele 1 und 2 sowie aus der Referenzmischung hergestellten Vulkanisate wurden den unten angegebenen technischen Prüfungen unterzogen. Die ermittelten Werte sind der Tabelle 3 zu entnehmen.

Sehr gute Eigenschaften der Kautschukmischungen bzw. ihrer Vulkanisate wurden erreicht, wenn sich ihre Eigenschaftswerte in dem angegebenen "bevorzugten Bereich" befinden.

Für die Tests an Prüfkörpern wurden folgende Testverfahren angewandt:

### Mooney-Viskositätsmessung

Die Bestimmung erfolgte mittels Scherscheibenviskosimeter gemäß ASTM D 1646. Die Viskosität lässt sich aus der Kraft, die Kautschuke (und Kautschukmischungen) ihrer Verarbeitung entgegensetzen, direkt bestimmen. Beim Scherscheibenviskosimeter nach Mooney wird eine geriffelte Scheibe oben und unten mit Probensubstanz umschlossen und in einer beheizbaren Kammer mit etwa zwei Umdrehungen in der Minute bewegt. Die hierzu erforderliche Kraft wird als Drehmoment gemessen und entspricht der jeweiligen Viskosität. Die Probe wird in der Regel eine Minute lang auf 100°C vorgewärmt; die Messung dauert weitere 4 Minuten, wobei die Temperatur konstant gehalten wird. Die Viskosität wird zusammen mit den jeweiligen Prüfbedingungen angegeben, beispielsweise ML (1+4) 100°C (Mooney Viskosität, Rotorgröße L, Vorwärmzeit und Prüfzeit in Minuten, Prüftemperatur).

### Verwendetes Rheometer (Vulkameter) und An-/ Ausvulkanisationszeit

Der Vulkanisationsverlauf am MDR (moving die rheometer) und dessen analytischen Daten wurden an einem Monsanto-Rheometer MDR 2000 nach ASTM D5289-95 gemessen.

Als Anvulkanisationszeit (t5) wird die Zeit bestimmt, bei der 5% des Kautschuks vernetzt sind. Die gewählte Temperatur betrug 160°C.

Als Ausvulkanisationszeit (t95) wird die Zeit bestimmt, bei der 95% des Kautschuks vernetzt sind. Die gewählte Temperatur betrug 160°C.

Der Wert von Delta S' berechnet sich aus der Differenz zwischen dem höchsten und dem niedrigsten Wert der Rheometerkurve, demnach Sₘₐₓ - Sₘᵢₙ.

### Bestimmung Bruchdehnung, Zugfestigkeit, Modul 300

Diese Messungen erfolgten nach DIN 53504 (Zugversuch, Stab S2, 5-fach Messung).

### Bestimmung der Shore-A-Härte

Messung der Shore Härte (Shore A) nach DIN 53505 bei 23 °C (3-fach Messung).

### Rückprallelastizität

Messung der Rückprallelastizität bei 23 °C (3-fach Messung) nach DIN 53512.

### Bestimmung des DIN Abriebs

Die einfachste Methode zur Bestimmung des abrasiven Verschleißes stellt der sogenannte DIN-Abrieb nach ASTM D5963 dar. Der Prüfkörper aus dem zu prüfenden Elastomer wird dabei unter einer konstanten Anpresskraft und mit konstanter Geschwindigkeit (40 min-1) über einen festgelegten Reibweg (40 m) über einen auf einem rotierenden Zylinder befindlichen Prüfschmirgelbogen geführt. Anschließend wird der Materialverlust in mm³ bestimmt.

### Bestimmung des Verlustfaktors

Der Verlustfaktor tan δ wurde bei 60°C und einer Messfrequenz von 10 Hz gemäß dynamischer Dämpfung DIN EN ISO 6721-1 bestimmt.

**Tabelle 3: Prüfwerte**

| | | Referenz | Beispiel 1 | Beispiel 2 |
|---|---|---|---|---|
| t5 | min | 0,8 | 1,6 | 2,2 |
| t95 | min | 24,5 | 18,4 | 16,0 |
| Delta S' | dNm | 10,1 | 12,6 | 12,1 |
| MV | MU | 98 | 86 | 77 |
| Modul 300 | MPa | 8,9 | 10,5 | 10,5 |
| Bruchdehnung | % | 423 | 457 | 438 |
| Zugfestigkeit | MPa | 15,2 | 19,7 | 18,3 |
| Härte | Shore A | 60 | 58 | 58 |
| Rückprall bei 23°C | % | 39 | 38 | 42 |
| Rückprall bei 60 °C | % | 53 | 53 | 54 |
| DIN Abrieb | mm3 | 129 | 109 | 98 |
| Tan delta 60 °C | | 0,125 | 0,113 | 0,098 |

### Fazit:

Überraschend wurde gefunden, dass mit den erfindungsgemäßen Kautschukmischungen gemäß Beispielen 1 und 2 eine kürzere Ausvulkanisationszeit (t95), längere Anvulkanisationszeit (t5) sowie ein deutlich niedrigerer Verlustfaktor tan δ bei 60°C sowie deutlich niedriger DIN Abrieb im Vergleich zu der nicht erfindungsgemäßen Kautschukmischung Referenz erreicht wird, bei gleichbleibenden oder verbesserten weiteren mechanischen Eigenschaften.

## Patentansprüche

1. Kautschukmischung, enthaltend
- 50 bis 100 phr mindestens eines funktionalisierten Synthesekautschuks, bevorzugt eines funktionalisierten BR-Kautschuks und/oder funktionalisierten SBR-Kautschuks,
- 0 bis 50 phr mindestens eines Naturkautschuks und/ oder unfunktionalisierten Synthesekautschuks,
- 0,1 bis 250 phr mindestens eines hydroxylgruppenhaltigen oxidischen Füllstoffs,
- 0 bis 120 phr mindestens eines Ruß, bevorzugt 0,1 bis 100 phr,
- 0,1 bis 20 phr mindestens eines Vernetzers, bevorzugt ausgewählt aus der Reihe der Schwefelspender und/oder Schwefel,
sowie
0,5 bis 10 phr der mindestens einen ethoxylierten Verbindung der Formel (I)
RO(CH₂CH₂O)ₓH (I)
worin
R für Alkyl steht, wobei Alkyl verzweigt oder unverzweigt sein kann,
und
x für eine rationale Zahl von 1 bis 25 steht.

2. Kautschukmischung gemäß Anspruch 1, **dadurch gekennzeichnet, dass** R für C₁-C₂₀-Alkyl, bevorzugt für C₅-C₁₇-Alkyl steht, besonders bevorzugt für C₁₀-C₁₅-Alkyl, ganz besonders bevorzugt für *iso*-C₁₃-Alkyl, ganz ganz besonders bevorzugt für *iso*-C₁₃H₂₇.

3. Kautschukmischung gemäß einem der Ansprüche 1 oder 2, **dadurch gekennzeichnet, dass** x für eine rationale Zahl von 2 bis 22 steht, bevorzugt von 4 bis 20.

4. Kautschukmischung gemäß einem der Ansprüche 1-3, **dadurch gekennzeichnet, dass** der mindestens eine funktionalisierte Synthesekautschuk ausgewählt ist aus der Gruppe bestehend aus funktionalisiertem SBR-, funktionalisiertem BR- und funktionalisiertem IR-Kautschuk, bevorzugt aus funktionalisiertem SBR- und funktionalisiertem BR-Kautschuk.

5. Kautschukmischung gemäß einem der Ansprüche 1-4, **dadurch gekennzeichnet, dass** der mindestens eine funktionalisierte Synthesekautschuk an der Hauptkette und/oder an den Endgruppen durch eine oder mehrere funktionelle Gruppen ausgewählt aus Carboxylgruppen, Mercaptan-Gruppen, Alkoxysilan-Gruppen, Siloxan-Gruppen, Hydroxy-Gruppen, Ethoxy-Gruppen, Epoxy-Gruppen, Amino-Gruppen Phthalocyanin-Gruppen, Silan-Sulfid-Gruppen und Metallatom- enthaltenden Gruppen, substituiert ist, bevorzugt ausgewählt aus Mercaptan-Gruppen, Alkoxysilan-Gruppen und Hydroxy-Gruppen, besonders bevorzugt ausgewählt aus Mercaptan- Gruppen und Alkoxysilan-Gruppen.

6. Kautschukmischung gemäß einem der Ansprüche 1-5, **dadurch gekennzeichnet, dass** der mindestens eine hydroxylgruppenhaltige oxidische Füllstoff ausgewählt ist aus der Gruppe bestehend aus Kieselsäuren, synthetischen Silikaten und natürlichen Silikaten, und in einer Menge von 0,1 bis 250 phr, bevorzugt 20 bis 200 phr, besonders bevorzugt von 25 bis 180 phr, ganz besonders bevorzugt 30 - 160 phr in der Kautschukmischung enthalten ist.

7. Kautschukmischung gemäß einem der Ansprüche 1-6, **dadurch gekennzeichnet, dass** sie 0,5 bis 10 phr, bevorzugt von 1,0 bis 8 phr und besonders bevorzugt 1 bis 4 phr des mindestens einen Vernetzers aus der Reihe Schwefel und Schwefelspender enthält.

8. Kautschukmischung gemäß einem der Ansprüche 1-7, **dadurch gekennzeichnet, dass** sie mindestens ein Verstärkungsadditiv aus der Reihe der schwefelhaltigen organischen Silane, insbesondere der Alkoxysilylgruppen-haltigen schwefelhaltigen Silane und besonders bevorzugt der Trialkoxysilylgruppen-haltigen schwefelhaltigen organischen Silane enthält.

9. Kautschukmischung gemäß Anspruch 1, **dadurch gekennzeichnet, dass** sie
- 70 bis 100 phr mindestens eines funktionalisierten Synthesekautschuks, bevorzugt eines funktionalisierten BR-Kautschuks und/oder funktionalisierten SBR-Kautschuks,
- 0 bis 30 phr mindestens eines Naturkautschuks und/ oder unfunktionalisierten Synthesekautschuks,
- 20 bis 200 phr mindestens eines hydroxylgruppenhaltigen oxidischen Füllstoffs,
- 0,1 bis 120 phr mindestens eines Ruß, bevorzugt 0,1 bis 100 phr,
- 0,5 bis 10 phr mindestens eines Vernetzers, bevorzugt ausgewählt aus der Reihe der Schwefelspender und/oder Schwefel,
- 0,1 bis 10 phr Zinkoxid,
- 0,5 bis 10 phr mindestens eines Vulkanisationsbeschleunigers, insbesondere aus der Reihe der Sulfenamide,
- 0,1 bis 10,0 phr mindestens eines Sekundärbeschleunigers,
- 0,5 bis 15 phr mindestens eines Verstärkungsadditives, insbesondere aus der Gruppe der schwefelhaltigen Silane,
- 0,1 bis 30 phr Kautschukhilfsmittel und
- 1 bis 15 phr der mindestens einen ethoxylierten Verbindung der Formel (I) enthält.

10. Verfahren zur Herstellung der erfindungsgemäßen Kautschukmischungen nach einem der Ansprüche 1-9, **dadurch gekennzeichnet, dass** in einem Mischprozess die jeweiligen Komponenten gemischt werden.

11. Verwendung der Kautschukmischungen nach einem der Ansprüche 1-9 zur Herstellung von Vulkanisaten und Kautschukformkörpern aller Art, insbesondere zur Herstellung von Reifen und Reifenbauteilen.

12. Vulkanisat, welches durch Vulkanisation mindestens einer Kautschukmischung nach einem der Ansprüche 1 - 9, bevorzugt bei einer Temperatur von 120 bis 200°C, erhalten wurde.

13. Fahrzeugreifen, **dadurch gekennzeichnet, dass** er wenigstens ein Vulkanisat nach Anspruch 12 aufweist.

14. Verwendung der mindestens einen ethoxylierten Verbindung der Formel (I)
RO(CH₂CH₂O)ₓH (I)
worin
R für Alkyl steht, wobei Alkyl verzweigt oder unverzweigt sein kann,
und
x für eine rationale Zahl von 1 bis 25 steht, insbesondere in einer Menge von 0,5 bis 20 phr, besonders bevorzugt von 1,0 bis 15,0 phr,
und des mindestens einen funktionalisierten Synthesekautschuks, insbesondere in einer Menge von 50-100 phr, besonders bevorzugt von 70-100 phr,
zur Herstellung von Vulkanisaten mit niedrigem Rollwiderstand aus schwefelvernetzbaren Kautschukmischungen bei einer Vulkanisationstemperatur von 120 bis 200°C.

15. Haftmischung enthaltend mindestens eine Kautschukmischung gemäß einem der Ansprüche 1 bis 9 und mindestens ein Haftmittel auf Basis von Resorcin, Formaldehyd und Kieselsäure.
